(19) Europäisches Patentamt
European Patent Office
Office européen des brevets

(11) **EP 4 253 127 A1**

(12) **EUROPÄISCHE PATENTANMELDUNG**

(43) Veröffentlichungstag:
**04.10.2023  Patentblatt 2023/40**

(21) Anmeldenummer: **22165049.2**

(22) Anmeldetag: **29.03.2022**

(51) Internationale Patentklassifikation (IPC):
**B60L 53/00** (2019.01)          **G08G 1/00** (2006.01)

(52) Gemeinsame Patentklassifikation (CPC):
**B60L 53/00; G08G 1/00**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Duckheim, Mathias
91052 Erlangen (DE)**

• **Holst, Jens-Christian
10711 Berlin (DE)**
• **Husarek, Dominik
81373 München (DE)**
• **Metzger, Michael
85570 Markt Schwaben (DE)**
• **Niessen, Stefan
91056 Erlangen (DE)**
• **Thiem, Sebastian
91413 Neustadt an der Aisch (DE)**

(74) Vertreter: **Siemens Patent Attorneys
Postfach 22 16 34
80506 München (DE)**

(54) **VERFAHREN ZUM ERMITTELN EINER CO2-BILANZ FÜR EIN ELEKTRISCHES FAHRZEUG**

(57)    Es wird ein Verfahren zur Ermittlung einer $CO_2$--Bilanz für einen Energiespeicher eines elektrischen Fahrzeuges am Ende wenigstens eines Ladevorgangs des Energiespeichers vorgeschlagen. Das Verfahren ist gekennzeichnet dadurch, dass die $CO_2$-Bilanz des Energiespeichers am Ende des Ladevorgangs mittels der $CO_2$-Bilanz des Energiespeichers beim Beginn des Ladens und einer beim Laden zeitlich aufgelösten $CO_2$-Bilanz $c_{\Delta t}^{Charge}$ der geladenen Energie $E_{\Delta t}^{Charge}$ ermittelt wird.

Weiterhin betrifft die Erfindung ein Verfahren zur Steuerung des Verkehrs von mehreren elektrischen Fahrzeugen mittels einer bezüglich der Fahrzeuge zentralen Steuervorrichtung.

EP 4 253 127 A1

**Beschreibung**

Die Erfindung betrifft ein Verfahren gemäß dem Oberbegriff des Patentanspruches 1 sowie ein Verfahren gemäß dem Oberbegriff des Patentanspruches 8.

Zur kohlenstoffarmen Deckung des Energiebedarfs (Dekarbonisierung) bedarf es einer zunehmenden Elektrifizierung. Das ist insbesondere deshalb der Fall, da dadurch erneuerbare Stromerzeugungsquellen, beispielsweise Photovoltaikanlagen oder Windkraftanlagen, verbessert eingebunden werden können.

Ein technisches Ziel der Elektrifizierung ist es, eine möglichst kohlenstoffdioxidarme ($CO_2$-arme) Versorgung bereitzustellen. Insbesondere die Elektrifizierung im Bereich der Mobilität, beispielsweise durch elektrische Fahrzeuge, ist für eine kohlenstoffdioxidarme Mobilität entscheidend. Hierbei ist ein möglichst kohlenstoffarmes Laden der elektrischen Fahrzeuge anzustreben. Allerdings ist es hierzu zunächst erforderlich die $CO_2$-Bilanz ($CO_2$-Footprint) von elektrischen Fahrzeugen beziehungsweise ihrer Energiespeicher möglichst realitätsnah zu bestimmen. Aufgrund der gegebenenfalls räumlich deutlich variierenden Ladestandorte von elektrischen Fahrzeugen, beispielsweise elektrischen Lastkraftwagen, ist dies eine technische Herausforderung.

Aus dem Stand der Technik ist bekannt, die $CO_2$-Bilanz beispielsweise mittels eines Einkaufs von Grünstrom-Zertifikaten zu ermitteln. Dies ist jedoch eine rein rechnerische, buchhalterische und keine technische Bewertung. Das ist insbesondere deshalb der Fall, da hierbei die Gleichzeitigkeit von erneuerbarer Erzeugung und Last typischerweise keine Rolle spielt.

Weiterhin ist es bekannt zur Ermittlung der betrieblichen $CO_2$-Emissionen von elektrischen Fahrzeugen einen zeitlich konstanten jährlichen Strommix heranzuziehen. Dies wird jedoch der Dynamik von elektrischen Fahrzeugen kaum gerecht.

Der vorliegenden Erfindung liegt die Aufgabe zugrunde, eine verbesserte $CO_2$-Bilanz für elektrische Fahrzeuge zu ermitteln.

Die Aufgabe wird durch ein Verfahren mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Das erfindungsgemäße Verfahren zur Ermittlung einer $CO_2$-Bilanz für einen Energiespeicher eines elektrischen Fahrzeuges am Ende wenigstens eines Ladevorgangs des Energiespeichers, ist gekennzeichnet dadurch, dass die $CO_2$-Bilanz des Energiespeichers am Ende des Ladevorgangs mittels der $CO_2$-Bilanz des Energiespeichers beim Beginn des Ladens und einer beim Laden zeitlich aufgelösten $CO_2$-Bilanz $c_{\Delta t}^{Charge}$ der geladenen Energie $E_{\Delta t}^{Charge}$ ermittelt wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

$CO_2$-Bilanz beziehungsweise $CO_2$-Footprint pro Kilowattstunde bedeutet im Folgenden $CO_2$ äquivalente GhG Treibhausgasemissionen entsprechend dem Treibhausgasprotokoll (englisch: Greenhouse Gas Protocol; GhG).

Ein elektrisches Fahrzeug kann ein elektrisches Landfahrzeug, ein elektrisches Luftfahrzeug oder ein elektrisches Wasserfahrzeug sein. Beispielsweise ist ein elektrisches Fahrzeug ein Elektroauto, ein elektrischer Lastkraftwagen, ein elektrisches Schienenfahrzeug, ein elektrisches Flugzeug oder ein elektrisches Schiff beziehungsweise Boot. Elektrische Fahrzeuge im Sinne der vorliegenden Erfindung sind ebenfalls Hybridelektrofahrzeuge.

Insbesondere für Hybridelektrofahrzeuge kann der Fahrmodus, das heißt elektrisch oder mit Verbrennungsmotor, beziehungsweise der Füllstand der Batterie, in die Ermittlung der CO2-Bilanz mit einfließen beziehungsweise bei dieser berücksichtigt werden.

Typischerweise werden elektrische Fahrzeuge mittels einer Ladeeinrichtung elektrisch geladen, das heißt ihr Energiespeicher wird durch diese wenigstens teilweise, insbesondere vollständig, geladen.

Der Energiespeicher ist insbesondere ein elektrochemischer Energiespeicher, beispielsweise ein Akkumulator, insbesondere ein Lithium-Ionen-Akkumulator.

Gemäß der vorliegenden Erfindung wird die $CO_2$-Bilanz für den Energiespeicher am Ende eines Ladevorgangs dadurch ermittelt, dass die gegebenenfalls zeitlich variierende $CO_2$-Bilanz $c_{\Delta t}^{Charge}$ der geladenen Energie $E_{\Delta t}^{Charge}$ berücksichtigt wird. Mit anderen Worten erfolgt eine beim Laden zeitlich aufgelöste Ermittlung der $CO_2$-Bilanz. Dadurch wird die $CO_2$-Bilanz des Energiespeichers besonders genau und für jeden Ladevorgang einzeln bestimmt beziehungsweise ermittelt. Insbesondere wird dadurch eine sich zeitlich verändernde $CO_2$-Bilanz der geladenen Energie berücksichtigbar. Mit anderen Worten wird bei jedem Ladevorgang die geladene Energie mit der zum Ladezeitpunkt gegebenen $CO_2$-Bilanz des Stromes bewertet und so eine besonders vorteilhafte $CO_2$-Bilanz (pro Kilowattstunde) für den Energiespeicher ermittelt.

Die erfindungsgemäße ermittelte zeitlich aufgelöste $CO_2$-Bilanz bildet somit die technische Grundlage für ein $CO_2$-ärmeres Laden von elektrischen Fahrzeugen, indem beispielsweise eine Incentivierung von bes-

seren CO$_2$-Bilanzen erfolgt. Da die CO$_2$-Bilanz $c_{\Delta t}^{\text{Charge}}$ ebenso von der jeweiligen Ladeeinrichtung abhängig sein kann, wird somit ein zeitlich und räumlich aufgelöstes Ermitteln der CO$_2$-Bilanz des Energiespeichers beziehungsweise des elektrischen Fahrzeuges nach seinem Laden bereitgestellt. Hierbei ist die Berücksichtigung des Ladevorgangs vorteilhaft, da beim Entladen des Energiespeichers, beispielsweise während einer Fahrt, sich die CO$_2$-Bilanz der mittels des Energiespeichers gespeicherten Energie nicht ändert. Sie bleibt somit während der Fahrt konstant.

Gemäß der vorliegenden Erfindung wird somit eine möglichst realitätsnahe CO$_2$-Bilanz für elektrische Fahrzeuge ermittelt. Dadurch kann ein CO$_2$-armes Laden gefördert werden. Beispielsweise erfolgt hierzu ein vorausschauendes Laden der Elektrofahrzeuge, sodass Ladeeinrichtungen, die nach dem Laden eine bessere CO$_2$-Bilanz aufweisen würden, bevorzugt werden, beispielsweise durch eine entsprechende Auswahl und/oder Anzeige im Fahrzeug. Hierzu können bereits für andere Fahrzeuge ermittelte CO$_2$-Bilanzen berücksichtigt beziehungsweise herangezogen werden. Es kann somit eine Empfehlung für eine im Sinne der vorliegenden Erfindung CO$_2$-ärmste Ladeeinrichtung erfolgen. Beispielsweise indem tagsüber das Laden auf einem Firmenparkplatz oder am Abend das Laden an einer Schnellladesäule auf einem Supermarktplatz beim Einkaufen aufgrund hoher Windenergie empfohlen wird. Es wird somit eine zeitlich und örtlich beziehungsweise räumlich aufgelöste Empfehlung zum Laden durch das erfindungsgemäße Ermitteln der CO$_2$-Bilanz ermöglicht.

Die vorliegende Erfindung ermöglicht somit durch das Berücksichtigen der zeitlichen Variation der CO$_2$-Bilanz der geladenen Energie eine verbesserte Ermittlung der CO$_2$-Bilanz des Energiespeichers beziehungsweise des elektrischen Fahrzeuges sowie eine Prognose für die zu erwartende CO$_2$-Bilanz nach einem Laden.

Das erfindungsgemäße Verfahren zur Steuerung des Verkehrs von mehreren elektrischen Fahrzeugen mittels einer bezüglich der Fahrzeuge zentralen Steuervorrichtung, ist gekennzeichnet dadurch, dass für den Energiespeicher jedes elektrischen Fahrzeuges eine CO$_2$-Bilanz gemäß einem der vorhergehenden Ansprüche ermittelt wird, wobei in Abhängigkeit der jeweiligen ermittelten CO$_2$-Bilanz für das elektrische Fahrzeug spezifische verkehrskoordinierende Maßnahmen durch die Steuervorrichtung erfolgen.

Es ergeben sich zum erfindungsgemäßen Verfahren zur Ermittlung einer CO$_2$-Bilanz gleichwertige und gleichwirkende Vorteile und/oder Ausgestaltungen.

Gemäß einer vorteilhaften Ausgestaltung der Erfindung wird die CO$_2$-Bilanz des Energiespeichers am Ende des Ladevorgangs iterativ durch

$$c_{t+\Delta t}^{\text{ES}} = (c_t^{\text{ES}} E_t^{\text{ES}} + c_{\Delta t}^{\text{Charge}} E_{\Delta t}^{\text{Charge}})/E_{t+\Delta t}^{\text{ES}}$$

ermittelt, wobei $c_{t+\Delta t}^{\text{ES}}$ die CO$_2$-Bilanz zum Zeitpunkt $t+\Delta t$, $c_t^{\text{ES}}$ die CO$_2$-Bilanz zum vorherigen Zeitpunkt $t$, $E_{t+\Delta t}^{\text{ES}}$ die gespeicherte Energiemenge zum Zeitpunkt $t+\Delta t$ und $E_t^{\text{ES}}$ die gespeicherte Energiemenge zum vorherigen Zeitpunkt $t$ kennzeichnet.

Hierbei bezeichnet $\Delta t$ die Zeitschrittweite mittels welcher der Ladezeitraum diskretisiert ist. Mit anderen Worten entspricht $\Delta t$ der zeitlichen Auflösung mittels welcher Änderungen der CO$_2$-Bilanz der geladenen Energie erfassbar und berücksichtigbar sind. Für jeden Zeitschritt $t+\Delta t$ wird die CO$_2$-Bilanz aus der vorherigen CO$_2$-Bilanz zum Zeitschritt $t$ sowie aus der CO$_2$-Bilanz der im Zeitintervall $\Delta t$ geladenen Energie beziehungsweise Energiemenge $E_{\Delta t}^{\text{Charge}}$ ermittelt. Da sich die CO$_2$-Bilanz auf eine Kilowattstunde bezieht, erfolgt der Bezug zu $E_{t+\Delta t}^{\text{ES}}$, das heißt die Division durch $E_{t+\Delta t}^{\text{ES}}$. Durch das vorteilhafte iterative Vorgehen ist somit zu jedem Zeitschritt die CO$_2$-Bilanz des Energiespeichers beziehungsweise des elektrischen Fahrzeuges bekannt. Weiterhin lässt sich das iterative Verfahren vorteilhafterweise effizient numerisch implementieren und ist durch seine dynamische beziehungsweise iterative Ausgestaltung vorteilhafterweise unabhängig von der Ladedauer, das heißt für jede Ladedauer kann am Ende die CO$_2$-Bilanz ermittelt werden.

Alternativ oder ergänzend wird der gespeicherte Kohlenstoffdioxidinhalt am Ende des Ladevorgangs durch ein aufintegrieren ermittelt und erst anschließend der spezifische Wert, das heißt die CO$_2$-Bilanz, durch Division durch den Gesamtenergieinhalt gebildet.

In einer vorteilhaften Weiterbildung der Erfindung wird die ermittelte CO$_2$-Bilanz zusätzlich auf eine Strecke, insbesondere auf 100 Kilometer, bezogen.

Dadurch wird die CO$_2$-Bilanz vorteilhafterweise eine auf die Strecke beziehungsweise Fahrtstrecke bezogene CO$_2$-Bilanz bereitgestellt. Damit wird quantifiziert wieviel CO$_2$, beispielsweise in Gramm, pro Kilowattstunde und pro Fahrtstrecke, insbesondere pro 100 Kilometern, ausgestoßen wird.

Gemäß einer vorteilhaften Ausgestaltung der Erfindung wird für die zeitlich aufgelöste CO$_2$-Bilanz eine jeweils aktuelle CO$_2$-Bilanz der Stromversorgung einer zum Laden verwendeten Ladeeinrichtung verwendet.

Mit anderen Worten wird vorteilhafterweise der Versorgungsmix der Ladeeinrichtung oder einer Region beziehungsweise eines Gebiets, in welchem die Ladestation angeordnet ist, als $c_{\Delta t}^{Charge}$ verwendet. Dadurch wird vorteilhafterweise die lokale $CO_2$-Bilanz des lokal erzeugten oder lokal bereitgestellten Stroms verwendet. Diese ist somit maßgeblich für die $CO_2$-Bilanz des Energiespeichers nach dem Laden. Zudem ist dadurch sichergestellt, dass die lokale $CO_2$-Bilanz durch die ermittelte $CO_2$-Bilanz des Energiespeichers beziehungsweise des elektrischen Fahrzeuges berücksichtigt wird und somit eine örtlich beziehungsweise räumlich aufgelöste Ermittlung der $CO_2$-Bilanz erfolgt.

Hierbei kann die lokale $CO_2$-Bilanz $c_{\Delta t}^{Charge}$ der Ladeeinrichtung beispielsweise durch ein Erfassen von Messwerten ermittelt werden, wobei die Messwerte an möglichst allen lokalen beziehungsweise regionalen oder örtlichen Erzeugungsanlagen erfasst werden. Hierbei ist vorteilhaft, wenn die Messwerte möglichst aktuell erfasst werden, sodass für $c_{\Delta t}^{Charge}$ eine möglichst aktuelle $CO_2$-Bilanz der Ladeeinrichtung verwendet wird.

Es ist somit vorteilhaft, wenn die aktuelle $CO_2$-Bilanz der Stromversorgung mittels Messwerten von Stromerzeugungsanlagen, mittels Strommarktergebnissen und/oder mittels Wetterdaten und einer Abschätzung über erneuerbare Energiegewinnung ermittelt wird.

Mit anderen Worten kann die aktuelle $CO_2$-Bilanz der Ladeeinrichtung in einer Region beziehungsweise in einem Gebiet dadurch bestimmt werden, dass jeder erzeugenden energietechnischen Anlage eine $CO_2$-Bilanz für die Stromgestehung zugewiesen wird. Je nach lokalem Versorgungsmix kann gegebenenfalls nur eine mittlere CO2-Bilanz der Region oder des Gebiets ermittelt werden. Die zu einem aktuellen Zeitpunkt erzeugenden Anlagen können hierbei vorteilhafterweise über Messwerte an allen Anlagen ermittelt werden und beispielsweise an eine zentrale Steuervorrichtung, beispielsweise eines Netzbetreibers, übermittelt werden, und/oder mittels Strommarktergebnissen ermittelt werden, und/oder basierend auf Wetterdaten kann die erneuerbare Erzeugung abgeschätzt werden, und/oder unter Berücksichtigung einer Vorhersage für die Stromlast kann die restliche fossile Erzeugung ermittelt werden und näherungsweise eine $CO_2$-Bilanz der Stromerzeugung in der Region beziehungsweise dem Gebiet ermittelt werden. Die derart ermittelte zeitlich aufgelöste $CO_2$-Bilanz wird dann als $c_{\Delta t}^{Charge}$ verwendet. Durch die vorteilhafterweise zeitlich aufgelöste Zuordnung der $CO_2$-Bilanz wird eine genauere und quantitative Bestimmung der somit sinnbildlich getankten $CO_2$-Bilanz ermöglicht.

Weiterhin kann eine Vorhersage für die $CO_2$-Bilanz der Stromgestehung in einer Region beziehungsweise einem Gebiet erfolgen und verwendet werden. Beispielsweise wird aus Day-Ahead-Strommarktergebnissen eine $CO_2$-Bilanz für den nächsten Tag vorausberechnet. Alternativ oder ergänzend wird wiederum das Verfahren mittels Wettervorhersagen verwendet, um die Erzeugung erneuerbarer Energien abzuschätzen.

Die aktuellen und/oder vorhergesagten $CO_2$-Footprints beziehungsweise $CO_2$-Bilanzen des Stroms in einer Region beziehungsweise einem Gebiet, beispielsweise einer Stadt, einem Landkreis, einem Bundesland, einem Staat und/oder einem Bilanzkreis, können einem Nutzer des elektrischen Fahrzeuges über eine Schnittstelle (HMI) angezeigt werden und somit Empfehlung bezüglich der Ladeeinrichtung und/oder bezüglich des Ladezeitpunktes vorgeschlagen werden.

Werden die genannten Empfehlungen zusätzlich über mehrere elektrische Fahrzeuge zentral durch die Steuervorrichtung gesteuert, so ist es möglich, dass nicht alle Fahrzeuge zur gleichen Ladeeinrichtung geleitet werden, sondern zur möglicherweise zweitbesten, drittbesten und so weiter. Als analoges Ausführungsbeispiel kann Google Maps herangezogen werden. Hier werden Nutzern aufgrund der aktuellen Verkehrslage unterschiedliche Empfehlungen gemacht um einen Engpass, beispielsweise eine Straßensperrung oder einen Stau, über mehrere Alternativen möglichst effizient auszugleichen.

Beispielsweise wird für den genannten Algorithmus, den die Steuervorrichtung zur genannten Steuerung ausführt, eine Zielfunktion für eine mathematische Optimierung bereitgestellt. Hierbei quantifiziert die Zielfunktion mehrere mögliche Ladeeinrichtungen bezüglich ihrer $CO_2$-Bilanz und ihrer Auslastung. Durch ein numerisches Extremalisieren kann dann - wie obenstehend genannt - die in diesem Sinne beste, zweitbeste, drittbeste Ladeeinrichtung ermittelt werden. Alternativ oder ergänzend werden N mögliche gute Ladeeinrichtungen gezogen, wobei je besser eine Ladeeinrichtung ist, desto höher wird sie gewichtet. Weiterhin können alternativ oder ergänzend zunächst die beste Ladeeinrichtung, dann die zweitbeste Ladeeinrichtung und so weiter der Reihe nach reserviert und/oder angefahren werden, bis deren jeweilige Auslastung erreicht ist. Hierbei können Belegungsdaten der einzelnen Ladeeinrichtungen berücksichtigt werden. Die Belegung kann visuell durch Kameras ermittelt werden, die dann 0-1 Signale korrespondierend zu nicht belegt beziehungsweise belegt an die Steuervorrichtung übermitteln und/oder zur Verfügung.

In einer vorteilhaften Weiterbildung der Erfindung wird die aktuelle $CO_2$-Bilanz der Stromversorgung der zum Laden verwendeten Ladeeinrichtung aus einer mittleren $CO_2$-Bilanz eines Gebiets, zu welchem die Ladeeinrichtung zugehörig ist, ermittelt.

Hierbei kann das Gebiet bevorzugt ein Land beziehungsweise ein Staatsgebiet sein, eine Region, eine Gemeinde, eine Stadt beziehungsweise ein Stadtgebiet oder ebenfalls ein Netzgebiet sowie ebenfalls ein Bilanzkreis. Für diese abgrenzbaren Gebiete ist typischerweise

eine mittlere $CO_2$-Bilanz bekannt, die als aktuelle $CO_2$-Bilanz beim Laden vorteilhafterweise herangezogen werden kann.

Gemäß einer vorteilhaften Ausgestaltung der Erfindung wird die Ladeleistung der Ladeeinrichtung in Abhängigkeit der zeitabhängigen $CO_2$-Bilanz $c_{\Delta t}^{\text{Charge}}$ zeitlich eingestellt.

Besonders bevorzugt wird die Ladeleistung in dem Sinne intelligent eingestellt, dass diese reduziert wird, wenn die $CO_2$-Bilanz steigt, und diese erhöht wird, wenn die $CO_2$-Bilanz der Ladeeinrichtung sinkt. Dadurch wird der Ladevorgang vorteilhafterweise mittels der $CO_2$-Bilanz der aktuellen Stromversorgung in einem Gebiet dynamisch und intelligent angepasst und die $CO_2$-Bilanz des Energiespeichers beziehungsweise des elektrischen Fahrzeuges möglichst klein gehalten. Weiterhin können ergänzend, beispielsweise mittels einer zentralen Steuervorrichtung, Leistungspendelungen in der Stromversorgung reduziert oder verhindert werden, beispielsweise durch dämpfende und/oder integrierende Elemente in der zentralen Regelung der vielen dezentralen Ladevorgänge.

In einer vorteilhaften Weiterbildung der Erfindung werden als verkehrskoordinierende Maße Streckenumleitungen, Einfahrtverbote und/oder Anpassung von Mautgebühren verwendet.

Dadurch kann der Verkehr vorteilhafterweise in Abhängigkeit der ermittelten $CO_2$-Bilanz, insbesondere fahrzeugspezifisch, gesteuert, geleitet oder geregelt werden. Die zentrale Steuervorrichtung bildet somit ein Verkehrsleitsystem aus, welches die fahrzeugspezifische $CO_2$-Bilanz bei der Steuerung oder Regelung berücksichtigt. Beispielsweise könnte ein Verbot für Elektroautos mit einer hohen $CO_2$-Bilanz zur Einfahrt in eine Stadt oder ein Stadtgebiet und/oder in eine Umweltzone einer Stadt oder eines Stadtgebietes vorgesehen sein. Weiterhin könnten höhere Mautgebühren für eine Einfahrt in eine Stadt oder ein Stadtgebiet und/oder für die Fahrt auf einer bestimmten Straße anfallen. Diese können aufgrund der erfindungsgemäßen fahrzeugspezifischen Ermittlung der $CO_2$-Bilanz für jedes Fahrzeug unterschiedlich und in Abhängigkeit der jeweiligen $CO_2$-Bilanz ermittelt und beansprucht werden.

Gemäß einer vorteilhaften Ausgestaltung der Erfindung übermittelt das jeweilige elektrische Fahrzeug seine ermittelte $CO_2$-Bilanz an die zentrale Steuervorrichtung.

Dies kann mittels Wireless-Übertragung, wie beispielsweise bei Mautstationen, erfolgen. Weiterhin kann das jeweilige Fahrzeug seine ermittelte $CO_2$-Bilanz lediglich an die jeweilige relevante Mautstation übermitteln. Die Mautstationen können dann die jeweiligen verkehrskoordinierende Maßnahmen veranlassen beziehungsweise durchführen und/oder diese an die zentrale Steuervorrichtung weiterleiten, die dann entsprechende Maßnahmen trifft.

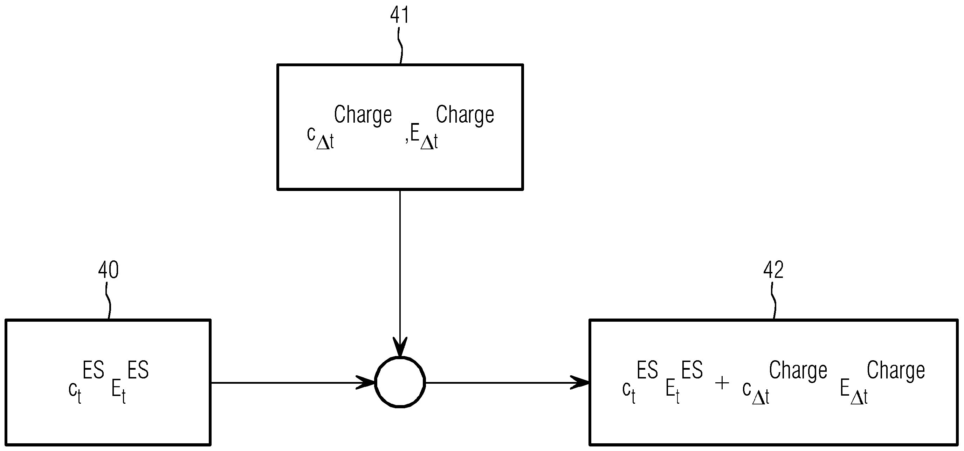

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur schematisiert ein Ablaufdiagramm zur Ermittlung der $CO_2$-Bilanz gemäß einer Ausgestaltung der vorliegenden Erfindung.

Gleichartige, gleichwertige oder gleichwirkende Elemente können in der Figur mit denselben Bezugszeichen versehen sein.

Die Figur zeigt das numerische Ermitteln der $CO_2$-Bilanz im diskreten, das heißt iterativen Fall. Grundsätzlich kann die $CO_2$-Bilanz ebenfalls kontinuierlich mittels einer Integration ermittelt werden und erst anschließend durch Division durch den erreichten Energieinhalt am Ende die $CO_2$-Bilanz (spezifischer Wert) ermittelt werden. Das genannte Vorgehen ist analog zum im Folgenden beschriebenen diskreten Verfahren.

Der Kohlenstoffdioxidinhalt $c_{t+\Delta t}^{\text{ES}} E_{t+\Delta t}^{\text{ES}}$ (Dimension: Masse $CO_2$) eines Energiespeichers zu einem Zeitpunkt $t + \Delta t$ wird aus dem Kohlenstoffdioxidinhalt $c_t^{\text{ES}} E_t^{\text{ES}}$ des Energiespeichers zum Zeitpunkt $t$ und dem zwischen den Zeitpunkten geladenen Kohlenstoffdioxidinhalt $c_{\Delta t}^{\text{Charge}} E_{\Delta t}^{\text{Charge}}$ ermittelt. Mit anderen Worten ist

$$c_{t+\Delta t}^{\text{ES}} E_{t+\Delta t}^{\text{ES}} = c_t^{\text{ES}} E_t^{\text{ES}} + c_{\Delta t}^{\text{Charge}} E_{\Delta t}^{\text{Charge}}$$

, wobei $c_{t+\Delta t}^{\text{ES}}$ die $CO_2$-Bilanz zum Zeitpunkt $t + \Delta t$, $c_t^{\text{ES}}$ die $CO_2$-Bilanz zum vorherigen Zeitpunkt $t$, $E_{t+\Delta t}^{\text{ES}}$ die gespeicherte Energiemenge zum Zeitpunkt $t + \Delta t$ und $E_t^{\text{ES}}$ die gespeicherte Energiemenge zum vorherigen Zeitpunkt $t$ kennzeichnet. Ferner ist $E_{\Delta t}^{\text{Charge}}$ die im Zeitbereich $\Delta t$ geladene Energiemenge. Die $CO_2$-Bilanz weist somit die Dimension Masse $CO_2$ pro Energie auf, beispielsweise die Einheit Gramm $CO_2$ pro Kilowattstunde. Zusätzlich kann diese auf eine Strecke von 100 Kilometern bezogen werden.

Zum Zeitpunkt $t$ umfasst der Energiespeicher somit den Kohlenstoffdioxidinhalt $c_t^{\text{ES}} E_t^{\text{ES}}$. Dies ist durch das Bezugszeichen 40 in der Figur verdeutlicht. Innerhalb des Zeitbereiches $\Delta t$ wird der Energiespeicher des elektrischen Fahrzeuges an einer Ladeeinrichtung mit der Energie beziehungsweise Energiemenge $E_{\Delta t}^{\text{Charge}}$ beladen. Diese geladene Energiemenge weist je nach Stromversorgung der Ladeeinrichtung die $CO_2$-Bilanz $c_{\Delta t}^{\text{Charge}}$ auf. Somit wird innerhalb des Zeit-

bereiches $\Delta t$ der Energiespeicher mit dem Kohlenstoffdioxidinhalt $c_{\Delta t}^{\text{Charge}} E_{\Delta t}^{\text{Charge}}$ beladen. Dies ist durch das Bezugszeichen 41 in der Figur gekennzeichnet. Dadurch weist der Energiespeicher zum Zeitpunkt $t + \Delta t$ die Summe aus dem Kohlenstoffdioxidinhalt zum Zeitpunkt $t$ und dem geladenen Kohlenstoffdioxidinhalt auf, das heißt es gilt

$$c_{t+\Delta t}^{\text{ES}} E_{t+\Delta t}^{\text{ES}} = c_t^{\text{ES}} E_t^{\text{ES}} + c_{\Delta t}^{\text{Charge}} E_{\Delta t}^{\text{Charge}}$$

. Dies ist durch das Bezugszeichen 42 gekennzeichnet. Hieraus kann durch Division durch die Energiemenge innerhalb des Energiespeichers $E_{t+\Delta t}^{\text{ES}}$ zum Zeitpunkt $t + \Delta t$ oder am Ende des Ladevorgangs die spezifische $CO_2$-Bilanz $c_{t+\Delta t}^{\text{ES}}$ zum Zeitpunkt $t + \Delta t$ beziehungsweise am Ende ermittelt werden. Durch das genannte iterative Verfahren oder durch Aufintegrieren kann somit die $CO_2$-Bilanz am Ende des Ladevorgangs ermittelt werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

40    Kohlenstoffdioxidinhalt zum Zeitpunkt $t$
41    Geladener Kohlenstoffdioxidinhalt
42    Kohlenstoffdioxidinhalt zum Zeitpunkt $t + \Delta t$

**Patentansprüche**

1.  Verfahren zur Ermittlung einer $CO_2$-Bilanz für einen Energiespeicher eines elektrischen Fahrzeuges am Ende wenigstens eines Ladevorgangs des Energiespeichers, **gekennzeichnet dadurch, dass** die $CO_2$-Bilanz des Energiespeichers am Ende des Ladevorgangs mittels der $CO_2$-Bilanz des Energiespeichers beim Beginn des Ladens und einer beim Laden zeitlich aufgelösten $CO_2$-Bilanz $c_{\Delta t}^{\text{Charge}}$ der geladenen Energie $E_{\Delta t}^{\text{Charge}}$ ermittelt wird.

2.  Verfahren gemäß Anspruch 1, **gekennzeichnet dadurch, dass** die $CO_2$-Bilanz des Energiespeichers am Ende des Ladevorgangs iterativ durch

$$c_{t+\Delta t}^{\text{ES}} = (c_t^{\text{ES}} E_t^{\text{ES}} + c_{\Delta t}^{\text{Charge}} E_{\Delta t}^{\text{Charge}})/E_{t+\Delta t}^{\text{ES}}$$

, ermittelt wird, wobei $c_{t+\Delta t}^{\text{ES}}$ die $CO_2$-Bilanz zum Zeitpunkt $t + \Delta t$, $c_t^{\text{ES}}$ die $CO_2$-Bilanz zum vorherigen Zeitpunkt $t$, $E_{t+\Delta t}^{\text{ES}}$ die gespeicherte Energiemenge zum Zeitpunkt $t + \Delta t$ und $E_t^{\text{ES}}$ die gespeicherte Energiemenge zum vorherigen Zeitpunkt $t$ kennzeichnet.

3.  Verfahren gemäß Anspruch 1 oder 2, **gekennzeichnet dadurch, dass** die ermittelte $CO_2$-Bilanz zusätzlich auf eine Strecke, insbesondere auf 100 Kilometer, bezogen wird.

4.  Verfahren gemäß einem der vorhergehenden Ansprüche, **gekennzeichnet dadurch, dass** für die zeitlich aufgelöste $CO_2$-Bilanz $c_{\Delta t}^{\text{Charge}}$ eine jeweils aktuelle $CO_2$-Bilanz der Stromversorgung einer zum Laden verwendeten Ladeeinrichtung verwendet wird.

5.  Verfahren gemäß Anspruch 4, **gekennzeichnet dadurch, dass** die aktuelle $CO_2$-Bilanz der Stromversorgung mittels Messwerten von Stromerzeugungsanlagen, mittels Strommarktergebnissen und/oder mittels Wetterdaten und einer Abschätzung über erneuerbare Energiegewinnung ermittelt wird.

6.  Verfahren gemäß Anspruch 4 oder 5, **gekennzeichnet dadurch, dass** die aktuelle $CO_2$-Bilanz der Stromversorgung der zum Laden verwendeten Ladeeinrichtung aus einer mittleren $CO_2$-Bilanz eines Gebiets, zu welchem die Ladeeinrichtung zugehörig ist, ermittelt wird.

7.  Verfahren gemäß einem der Ansprüche 4 bis 6, **gekennzeichnet dadurch, dass** die Ladeleistung der Ladeeinrichtung in Abhängigkeit der zeitabhängigen $CO_2$-Bilanz $c_{\Delta t}^{\text{Charge}}$ zeitlich eingestellt wird.

8.  Verfahren zur Steuerung des Verkehrs von mehreren elektrischen Fahrzeugen mittels einer bezüglich der Fahrzeuge zentralen Steuervorrichtung, **gekennzeichnet dadurch, dass** für den Energiespeicher jedes elektrischen Fahrzeuges eine $CO_2$-Bilanz gemäß einem der vorhergehenden Ansprüche ermittelt wird, wobei in Abhängigkeit der jeweiligen ermittelten $CO_2$-Bilanz für das elektrische Fahrzeug spezifische verkehrskoordinierende Maßnahmen durch die Steuervorrichtung erfolgen.

**EP 4 253 127 A1**

9.  Verfahren gemäß Anspruch 8, **gekennzeichnet dadurch, dass** als verkehrskoordinierende Maße Streckenumleitungen, Einfahrtverbote und/oder Anpassung von Mautgebühren verwendet werden.

10. Verfahren gemäß Anspruch 8 oder 9, **gekennzeichnet dadurch, dass** das jeweilige elektrische Fahrzeug seine ermittelte $CO_2$-Bilanz an die zentrale Steuervorrichtung übermittelt.

Europäisches Patentamt
European Patent Office
Office européen des brevets

# EUROPÄISCHER RECHERCHENBERICHT

**Nummer der Anmeldung**

**EP 22 16 5049**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 784 897 B1 (PANASONIC IP MAN CO LTD [JP]) 25. März 2020 (2020-03-25) | 1-6 | INV. B60L53/00 G08G1/00 |
| Y | * Zusammenfassung; Abbildungen 4,5,6,13 * ----- | 7-10 | |
| Y | US 2020/111175 A1 (UYEKI ROBERT [US] ET AL) 9. April 2020 (2020-04-09) * Absatz [0087]; Abbildung 8 * ----- | 7 | |
| Y | US 8 063 605 B2 (TONEGAWA HIROMI [JP]; ICHISHI MASATO [JP] ET AL.) 22. November 2011 (2011-11-22) * Zusammenfassung; Abbildung 3 * ----- | 7 | |
| A | PUSCASIU ADELA ET AL: "Traffic control using distributed greenhouse gases measurements", 2018 IEEE INTERNATIONAL CONFERENCE ON AUTOMATION, QUALITY AND TESTING, ROBOTICS (AQTR), IEEE, 24. Mai 2018 (2018-05-24), Seiten 1-5, XP033369694, DOI: 10.1109/AQTR.2018.8402717 [gefunden am 2018-07-03] * Zusammenfassung; Abbildungen 4,5 * ----- | 1-10 | |
| Y | US 2010/305839 A1 (WENZEL THOMAS [DE]) 2. Dezember 2010 (2010-12-02) * Zusammenfassung; Abbildungen 1,2 * ----- | 8-10 | |

**RECHERCHIERTE SACHGEBIETE (IPC)**

B60L
G08G

Der vorliegende Recherchenbericht wurde für alle Patentansprüche erstellt

| Recherchenort | Abschlußdatum der Recherche | Prüfer |
|---|---|---|
| Den Haag | 19. August 2022 | Arias Pérez, Jagoba |

EPO FORM 1503 03.82 (P04C03)

# EP 4 253 127 A1

## ANHANG ZUM EUROPÄISCHEN RECHERCHENBERICHT
## ÜBER DIE EUROPÄISCHE PATENTANMELDUNG NR.

EP 22 16 5049

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-08-2022

| Im Recherchenbericht angeführtes Patentdokument | Datum der Veröffentlichung | Mitglied(er) der Patentfamilie | Datum der Veröffentlichung |
|---|---|---|---|
| EP 2784897 B1 | 25-03-2020 | CN 103947067 A | 23-07-2014 |
| | | EP 2784897 A1 | 01-10-2014 |
| | | ES 2798163 T3 | 09-12-2020 |
| | | JP 5967516 B2 | 10-08-2016 |
| | | JP 2013110881 A | 06-06-2013 |
| | | US 2014312841 A1 | 23-10-2014 |
| | | US 2019366871 A1 | 05-12-2019 |
| | | WO 2013076957 A1 | 30-05-2013 |
| US 2020111175 A1 | 09-04-2020 | US 2020111175 A1 | 09-04-2020 |
| | | US 2022215488 A1 | 07-07-2022 |
| US 8063605 B2 | 22-11-2011 | CN 101326076 A | 17-12-2008 |
| | | EP 1957312 A2 | 20-08-2008 |
| | | JP 5078119 B2 | 21-11-2012 |
| | | JP 2007185083 A | 19-07-2007 |
| | | US 2009096416 A1 | 16-04-2009 |
| | | WO 2007066198 A2 | 14-06-2007 |
| US 2010305839 A1 | 02-12-2010 | DE 102007045991 A1 | 02-04-2009 |
| | | EP 2193511 A1 | 09-06-2010 |
| | | US 2010305839 A1 | 02-12-2010 |
| | | WO 2009043665 A1 | 09-04-2009 |

EPO FORM P0461

Für nähere Einzelheiten zu diesem Anhang : siehe Amtsblatt des Europäischen Patentamts, Nr.12/82